# EUROPEAN PATENT APPLICATION

(11) **EP 4 089 859 A1**
(43) Date of publication of application: **16.11.2022**
(21) Application number: 21305602.1
(22) Date of filing: 10.05.2021
(51) Int. Cl.: H01S 3/11, H01S 3/067, H01S 3/00, H01S 3/16

(54) **INTRINSICALLY POLARIZED HIGH ENERGY MODE-LOCKED LASER OSCILLATOR OPERATING AT TWO-MICROMETER WAVELENGTH**

(71) Applicant: Novae, 87000 Limoges (FR)
(72) Inventor: GAPONOV, Dmitriy, 87000 Limoges (FR); LAVOUTE, Laure, 87000 Limoges (FR)
(74) Representative: Icosa

(57) **Abstract**

The present disclosure relates to a passive mode-locked polarized laser (300) comprising an oscillator, the oscillator comprising: a cavity (301); a pump source (302) coupled to the cavity (301); an optical output coupler (303); and an optical output isolator (304).

## Description

### FIELD OF DISCLOSURE

The present disclosure pertains to the field of mode-locked fiber laser. In particular, the disclosure relates to an intrinsically polarized high energy laser operating in mid-infrared.

### BACKGROUND OF DISCLOSURE

With the development of ultrafast optic applications, the importance of mode-locked fiber lasers rapidly increases. In comparison to their solid-state counterparts, the fiber-based nature of such laser oscillators offers a number of advantages due to either a complete absence, or a largely reduced number of free-space intracavity optical elements, in terms of overall stability (for example, mechanical and thermal) resulting in a consequently reduced requirements for external technical maintenance. Moreover, the fiber technology paves a simple way to maintain a linear polarization for the pulse all along the cavity round-trip thanks to widely accessible polarization maintaining fibers and fiber-based components. These features making them a good choice as a seed signal sources for industrial grade energetic ultrafast laser systems. Currently, such mode-locked fiber lasers operating at wavelength below 1.3 µm (especially at 1 µm) are well known to provide a robust operation together with relatively high output energy levels, which offers a certain flexibility and simplifications for the overall system fabrication (reduced numbers of preamplifications stages, spectral and temporal seed pulse properties management). This wavelength limit, imposed by intrinsic properties of silica used in fibers manufacturing, does not allow for high output energies when the operating wavelengths is longer than silica zero dispersion wavelength (λ > 1.3 µm) due to a law of conservation of energy in a form of a well-known soliton area theorem for the energy of a pulse propagating in an anomalous dispersion medium.

Classical approach to overpass this limitation is to up-chirp the intracavity pulse to effectively decrease its peak power, thus making possible to scale up the output energy. In anomalous dispersion regime it is typically done by intracavity dispersion management so that the total dispersion is compensated to reach around null values. Another interesting case, providing up-chirped pulses is, so called, dissipative solitonic regime. Here, the stable pulse propagation is governed not only by nonlinearity and dispersion, but also by a gain and losses of a corresponding medium where pulse propagates. The dissipative soliton regime of operation exists typically when total group delay dispersion (GDD) is higher than null values, which is a natural case for conventional Ytterbium fiber lasers, but demands a stronger dispersion control (typically, total GDD > about 0.05 ps²) for laser emitting at wavelength longer than silica zero dispersion wavelength at 1.3 µm.

Usually, the high-energy mode-locked polarized lasers operating in a spectral range where the dispersion of a gain material is anomalous are limited to a wavelength below 1.6 µm, corresponding to the well explored telecommunication range. In this operating range the dissipative soliton pulse propagation regimes is routinely used.

However, wavelength longer than 1.6 µm cannot be obtained with such lasers in a robust way. Indeed, solutions designed to cope with nonlinearity and dispersion rely on intracavity adjustable components which are sensitive to environmental conditions, encountered in industrial area. In particular, bending sensibility and polarization crosstalk becomes hard to control.

It is thus desirable to design high-energy mode-locked polarized lasers operating at wavelength higher than 1.6 µm, typically around 2 µm, and robust enough to be used in industrial environment.

In this disclosure, the total GDD of the cavity is designed to be larger than 0.1 ps². This feature allows for the intracavity pulses with spectral bandwidth larger than 5 nm to have a large positive chirp in a defined spectral range and therefore a maximum output pulse energy of more than 1 nJ.

In addition, the cavity is designed to support only one polarization state. It removes the polarization crosstalk between modes with orthogonal polarization, leading to a cavity which is more resistant to external perturbations compared to corresponding not polarization maintaining cavity. This feature can be provided by a fixed state (i.e., not adjustable) polarizer element disposed in the cavity. The combination of both features enables stable high energy pulses operation and is a true benefit at wavelengths where silica-based fibers show anomalous dispersion, preferentially around 2-micron.

### SUMMARY

To this end, the present invention relates to a passive mode-locked polarized laser comprising an oscillator generating ultrashort pulses, the oscillator comprising the following coupled components:
- a cavity;
- a pump source coupled to the cavity;
- an optical output coupler; and
- an optical output isolator;
characterized in that the operating wavelength is about 2 µm, and the net value of the total cavity group delay dispersion (total GDD) is larger than +0.1 ps².

Indeed, the total GDD larger than +0.1 ps² allows for the intracavity pulses with spectral bandwidth larger than 5 nm to have a large positive chirp in a defined spectral range and therefore a maximum output pulse energy of more than 1 nJ.

According to other advantageous aspects of the invention, the cavity of the passive mode-locked polarized laser comprises:
- an optical pump-signal combiner;
- a first reflecting element;
- a second reflecting element which is a modelocking reflecting element, and further comprises between the two reflecting elements:
- a gain material;
- a dispersion compensation system; and
- a fixed polarizer; preferably a fixed fibered linear polarizer,
and wherein the cavity is polarization maintaining.

The polarization maintaining cavity allows to remove the polarization crosstalk between modes with orthogonal polarization, leading to a cavity which is more resistant to external perturbations compared to corresponding not polarization maintaining cavity.

The combination of the total GDD larger than +0.1 ps² and the polarization maintaining feature enables stable high energy pulses operation and is a true benefit at wavelengths where silica-based fibers show anomalous dispersion, preferentially around 2 µm.

According to other advantageous aspects of the invention, the passive mode-locked polarized laser further includes one or more of the following features, taken alone or in any possible combination:
- the gain material is an anomalous dispersion gain material,
- the gain material is a silica fiber whose core is doped with thulium and/or holmium,
- the second reflecting element is a modelocking reflecting element which is a saturable absorber, preferably the saturable absorber is a saturable absorber mirror or is fiber coupled, more preferably the saturable absorber is fiber coupled and the coupling fiber is polarization maintaining,
- one of the modelocking reflecting elements is a spectral filter, preferably a chirped fiber Bragg grating,
- at least an element preserving a linear polarization for intracavity circulating light, preferably a section of a polarization maintaining fiber.

In one embodiment, the optical output coupler is coupled to a polarized chirped pulse amplifier temporally and spectrally matched to the oscillator, preferably the polarized chirped pulse amplifier is polarization maintaining.

According to other advantageous aspects of the invention, the polarized chirped pulse amplifier comprises:
- at least one pulse stretcher element with a spectral transmission bandwidth which coincides, or is greater than that of the oscillator;
- at least one preamplification stage;
- a pulse picker element configured to maintain the input signal polarization and serving to decrease a pulse repetition rate by an integer number of times;
- at least one amplification stage; and
- a free-space compressor with a spectral transmission bandwidth which coincides, or is greater than that of the oscillator.

According to other advantageous aspects of the invention, the polarized chirped pulse amplifier includes one or more of the following features, taken alone or in any possible combination:
- the at least one preamplification stage is based on a single mode polarization maintaining active fiber,
- the at least one amplification stage comprises a polarization maintaining large mode area active fiber,
- the polarized chirped pulse amplifier has a repetition rate lower than 30 MHz, preferably lying in 50 kHz - 1 MHz range.

The invention also relates to a method for generating polarized pulsed light having a wavelength of about 2 µm, the method comprising:
- providing a passive mode-locked polarized laser as disclosed above;
- directing the ultrashort pulses onto a stretcher element of the polarized chirped pulse amplifier via a polarization maintaining optical circulator;
- stretching the ultrashort pulses up to pulse duration ranging between 200 ps and 600 ps for a single passage through the stretcher aligned to have the same dispersion sign as for output pulses of the oscillator;
- outputting the stretched pulsed light to a preamplifier;
- providing the preamplified stretched pulsed light to a pulse picker element so as to decrease the repetition rate;
- amplifying the output stretched pulsed light while maintaining the polarization; and
- temporally compressing the amplified stretched pulse with the compressor element having a fixed, an absolute value of the linear dispersion parameter which is lower than corresponding absolute value of linear dispersion parameter of the stretcher element.

According to other advantageous aspects of the invention, the method further includes a step for optimizing a chirp of the oscillator output pulse by adjusting the power of its pump source in a range corresponding to a monopulse mode-lock operating regime.

### DEFINITIONS

In the present disclosure, the following terms have the following meanings:
**"About":** preceding a figure means plus or less 10% of the value of said figure.
**"Active fiber":** refers to a fiber having an amplification function.
**"Anomalous":** refers to a negative value of the GDD leading to a dispersive medium.
**"CFBG":** refers to a chirped fiber Bragg grating which is a fiber reflecting particular wavelengths while transmitting all others and characterized by a linear variation in the grating period.
**"Chirped volume Bragg grating":** refers to Bragg grating with a linear variation in the grating period formed inside a volume of otherwise transparent material by its refractive index modulation which results in consequent reflection of particular wavelengths while transmitting all others.
**"Coupled":** refers, when used as a connection between two elements of the laser or the amplifier, to an optical connection between these elements.
**"Dispersion-compensating fiber" or "DCF":** refers to a fiber, where a total dispersion is normal due to a special refractive index design allowed for a strong waveguide dispersion and a dispersion slope has an inverse value compared to DSF.
**"Dispersion-shifted fiber" or "DSF":** refers to a fiber, where a total dispersion is normal due to a zero-dispersion wavelength red-shifted compared to a standard single-mode step-index silica fiber.
**"Free-space":** refers to a volume of either void (or partially void) space, or a medium where light freely propagates without being guided inside of any kind of waveguide.
**"GDD":** refers to a group delay dispersion whose value defines a temporal pulse broadening per unit spectral bandwidth of the pulse. It corresponds to the second derivative of the change in spectral phase with respect to the angular frequency and has units of time squared.
**"Large mode area":** refers to a fiber whose effective mode area is larger than 100 µm².
**"Normal GDD"** or **"normal dispersion":** refers to a positive value of the GDD leading to a normally-dispersive medium where pulse longer wavelength spectral components propagate faster than shorter wavelength components.
**"OSA":** refers to optical spectrum analyzer.
**"Passive fiber":** refers to a fiber having no amplification function.
**"Passive modelocked laser":** refers to a laser wherein the modelocking characteristic is determined by internal components composing the cavity without complementary external active control of modelocking mechanism.
**"Polarization maintaining":** refers to the characteristic of a medium or component that preserves of the polarization state. To the contrary, a medium or component that does not preserve of the polarization state is called **"Not polarization maintaining"**.
**"Purely single mode fiber"** or **"Single mode fiber":** refers to a fiber whose geometrical structure of corresponding waveguide allows only one waveguiding mode per polarization direction for a given wavelength.
**"Large mode area fiber":** refers to a fiber which has a large core diameters d_{c} with corresponded effective mode field diameter larger than that of the standard ITU G.652-type case (i.e., larger than about 10 µm) for a given wavelength and which could be operated in a single propagation mode regime.
**"Spectrally matched":** characterizes two components whose transmission bandwidths coincide.
**"Temporally compressed":** refers to an initially stretched pulse where chirped is reduced with helps of compressor element being aligned to operate with the dispersion sign opposite to the stretcher element.
**"Temporally matched":** characterizes two components whose pulse duration bandwidths coincide.
**"Total GDD":** refers to total cavity group delay dispersion, i.e., the group delay dispersion measured over the entire cavity.

### DETAILED DESCRIPTION

This disclosure relates to a passive mode-locked polarized laser (100, 300, 500).

The passive mode-locked polarized laser (100, 300, 500) comprises an oscillator comprising the following coupled components:
- a cavity (101, 301);
- a pump source (102, 302);
- an optical output coupler 303; and
- an optical output isolator (104, 304).

The cavity (101, 301) determines the characteristics of the light pulses output by the oscillator. The light pulses output by the oscillator are ultrashort pulses allowing the energy and peak power of the laser to reach very high values. The ultrashort pulses in this disclosure are characterized by a pulse duration comprised between 0.1 ps and 100 ps. In one embodiment, the ultrashort pulses at the oscillator output are positively chirped and characterized by a chirped and minimally de-chirped (Fourier-limited) pulse durations values comprised between 0.1 ps and 30 ps, preferably between 0.3 ps and 10 ps, more preferably between 0.6 ps and 6 ps.

The total, i.e., over the entire cavity (101, 301), group delay dispersion (GDD), i.e., the measure of the temporal pulse broadening per unit spectral width, must be positive (GDD larger than 0 ps²) leading to the passive mode-locked polarized laser (100, 300, 500) operating in a normal dispersion propagation regime where a longer wavelength component of the output pulse propagates faster than shorter wavelength components making the output pulse positively chirped. The normal dispersion propagation regime allows ultrashort pulses to gain in energy during an intracavity round-trip amplification. In one embodiment, the total GDD is larger than 0.1 ps².

The pump source (102, 302) is an energy source in a form of photons characterized by a wavelength corresponding to the absorption band of active medium used in the oscillator cavity (101, 301). In one embodiment, the pump wavelength could be centered on either about 0.793 µm or 1.5 µm.

The optical output coupler (106, 303) allows the extraction of a portion of the light from the cavity (101, 301). In one embodiment, the optical output coupler (106, 303) acts as a spectral filter. The spectral filter may be a chirped fiber Bragg grating (CFBG). In one embodiment, the optical output coupler (106, 303) is located inside the cavity 301. In one embodiment, the optical output coupler is located outside the cavity 301.

The optical output isolator (104, 304) prevents any external parasitic feedback to the cavity (101, 301) which could perturb the stable modelocking laser operation. In one embodiment, the optical output isolator 304 is located directly after the optical output coupler 303.

In one embodiment, the cavity (101, 301) comprises:
- an optical pump-signal combiner (107, 307);
- a first reflecting element (106, 306);
- a second reflecting element (105, 305) which is a modelocking reflecting element,
and further comprises between the two reflecting elements (105, 305) and (106, 306):
- a gain material (108, 308);
- a dispersion compensation system (106, 309); and
- a fixed polarizer (110, 310); preferably a fixed fibered linear polarizer, and wherein the cavity (101, 301) is polarization maintaining.

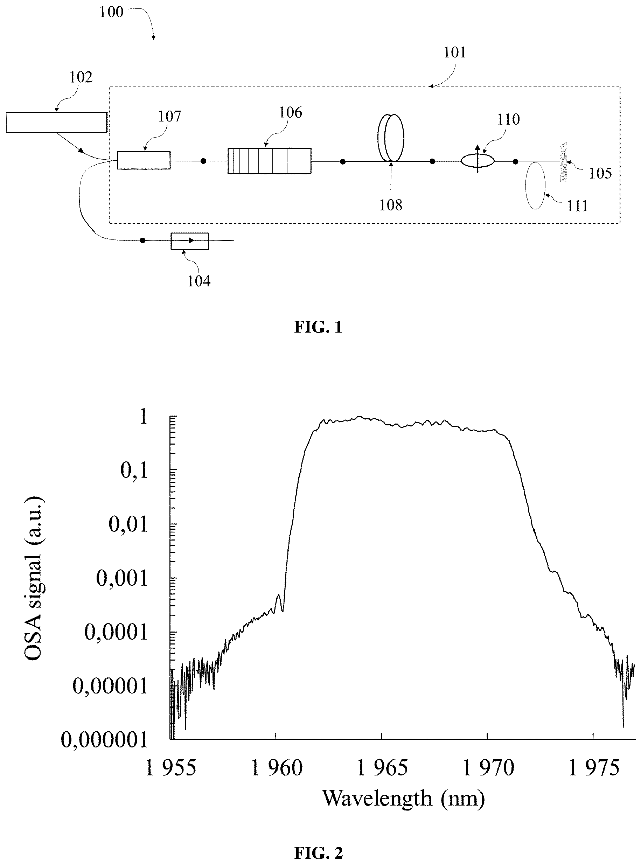

The light from a pump source (102, 302) is directed inside the cavity (101, 301) through the optical pump-signal combiner (107, 307). In one embodiment, the optical pump-signal combiner (107, 307) is a cladding pump combiner. In one embodiment, the optical pump-signal combiner (107, 307) is a core pump combiner based on a wavelength division multiplexor comprising a fiber polarizer, a polarization maintaining CFBG, a length of a polarization maintaining anomalous dispersion fiber, i.e., characterized by a negative value of the GDD., and/or a polarization maintaining fiber coupled saturable absorber mirror for dispersion, polarization and repetition rate control. In one embodiment, the optical pump-signal combiner (107, 307) is located between the two reflecting elements (105, 305) and (106, 306). In one embodiment represented in Fig. 1, the optical pump-signal combiner 107 is located before the first reflecting element 106.

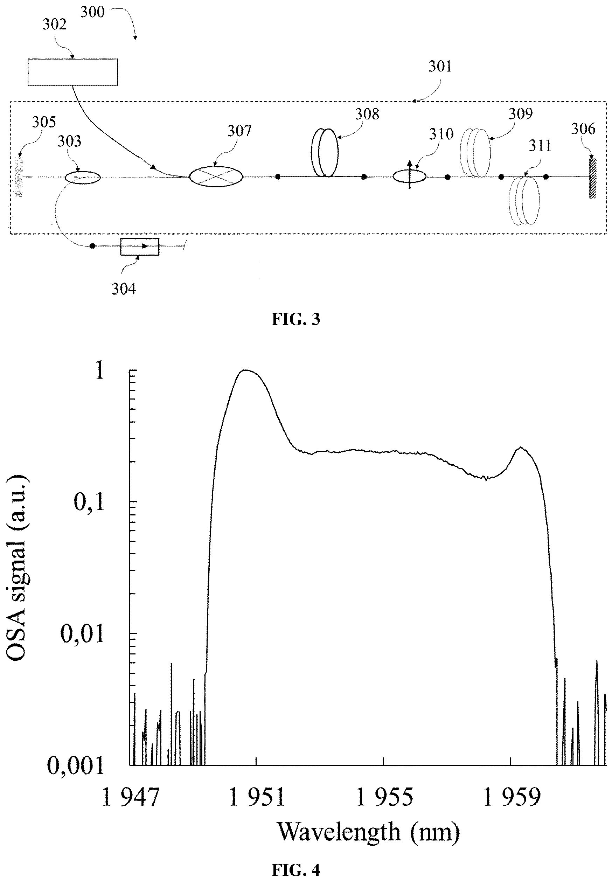

In one embodiment represented in Fig. 3, the first reflecting element 306 is a linear mirror made of dielectric, silver or gold material. An antireflection coating may be applied to the surface of the linear mirror. In one embodiment, the first reflecting element 306 is a spectral filter. The spectral filter may be a CFBG which may be inserted into a polarization maintaining fiber. The same CFBG element may play the role of optical output coupler and of the first reflecting element 106, as represented in Fig. 1. In one embodiment, the first reflecting (106, 306) element is a fiber-loop mirror. In one embodiment, the first reflecting element (106, 306) is coupled to a piece of single mode polarization maintaining fiber.

In one embodiment, the second reflecting element (105, 305) which is a modelocking reflecting element is a saturable absorber. In one embodiment, the second reflecting element 305 is fiber coupled to a polarization maintaining fiber, the polarization maintaining fiber being then coupled to the optical output coupler 303. In one embodiment, the saturable absorber is a mirror. The mirror may be a carbon nanotube or graphene films deposited directly on a passive fiber facet. In one embodiment the saturable absorber mirror is a semiconductor with maximum modulation depth at about the operating wavelength.

The gain material (108, 308) allows to amplify the energy of source photons via stimulated emission. The rare-earth elements constituting the gain material (108, 308) define the operating spectral range of the laser. In one embodiment, the gain material (108, 308) is an anomalous dispersion gain material. Preferentially, the gain material (108, 308) is a silica based active fiber. In one embodiment, the active fiber is core-doped with rare-earth elements such as, but not limited to, either purely thulium or holmium ions, or thulium/holmium ions mixture leading to an emission at a central wavelength from an operating spectral range of 1.7 µm to 2.2 µm. In one embodiment, the gain material pumping scheme is optical and could be realized either as cladding, or core-pumped by the optical pump-signal combiner (107, 307). In one embodiment, the energy of the output pulses is comprised between 1 nJ and 10 nJ. preferably between 1 nJ and 5 nJ, more preferably between 1 nJ and 2 nJ.

The dispersion compensation system 309 is a length of material that allows the total GDD over the entire cavity 301 to be normal. In one embodiment, the dispersion compensation system 309 is a fiber with a normal dispersion at about the operating wavelength. The fiber with a normal dispersion may be a fiber with tailored dispersion. In one embodiment, the fiber is a dispersion-shifted (DSF) type fiber or a dispersion-compensating (DCF) type fiber. In one embodiment, the fibered dispersion compensation system 309 is also polarization maintaining. The length of the fibered dispersion compensation system 309 is selected to reach the positive total GDD. In one embodiment, the dispersion compensation is provided by a CFBG. Advantageously, when the CFBG is placed directly after the optical pump-signal combiner 307 in a sense which provides positively chirped pulse after corresponding back-reflection to the cavity, additional length fibered dispersion compensation system 309 does not have to be inserted to reach the positive total GDD value. In one embodiment, the CFBG dispersion has a GDD value higher or equal to 0.5 ps², preferably higher or equal to 1 ps². In one embodiment represented in Fig. 1, the same CFBG element 106 plays the role of optical output coupler, of the first reflecting element and of the dispersion compensation system.

The fixed, i.e., not adjustable, polarizer (110, 310) allows to polarize the photons without any potential mechanical de-tunings, thus increasing robustness of the device in industrial environment. In one embodiment, the fixed polarizer (110, 310) is a fiber. In one embodiment, the fixed polarizer (110, 310) is a fiber-based in-line linear polarizer.

In one embodiment, the cavity (101, 301) comprises polarization maintaining elements allowing the preservation of the polarization state of the photons all along the cavity. Advantageously, preserving the polarization state all along the cavity avoids random coupling between polarization modes due to a small amount or residual birefringence caused by fibers itself or cavity manufacturing imperfections (including fiber bending, reflective elements integration, etc.). Random coupling between polarization modes leads to a variation of the polarization state in time which is problematic for industrial grade system integration. Polarization maintaining elements introduce strong artificial birefringence leading to random coupling between polarization modes largely reduced. In one embodiment, the polarization maintaining element is a fiber with anomalous or normal dispersion. In one embodiment, the polarization maintaining element is a CFBG. In one embodiment, the polarization maintaining element is an integrated saturable absorber.

In one embodiment, the cavity (101, 301) further comprises a spectral filtering element to restrict the operating wavelength. The spectral filtering element may be a Bragg grating element with anomalous or normal dispersion polarization maintaining fiber. In one embodiment, the optical output coupler 303 includes the spectral filtering element. In one embodiment, the optical output coupler 303 includes the Bragg grating.

In one embodiment, the cavity (101, 301) further comprises a length of passive fiber (111, 311) allowing the control of the repetition rate. In one embodiment, the passive fiber (111, 311) is polarization maintaining. In one embodiment, the passive fiber (111,311) is anomalous. In one embodiment, the repetition rate of the cavity (101, 301) ranges between 2 MHz and 150 MHz, preferably between 2 MHz and 30 MHz.

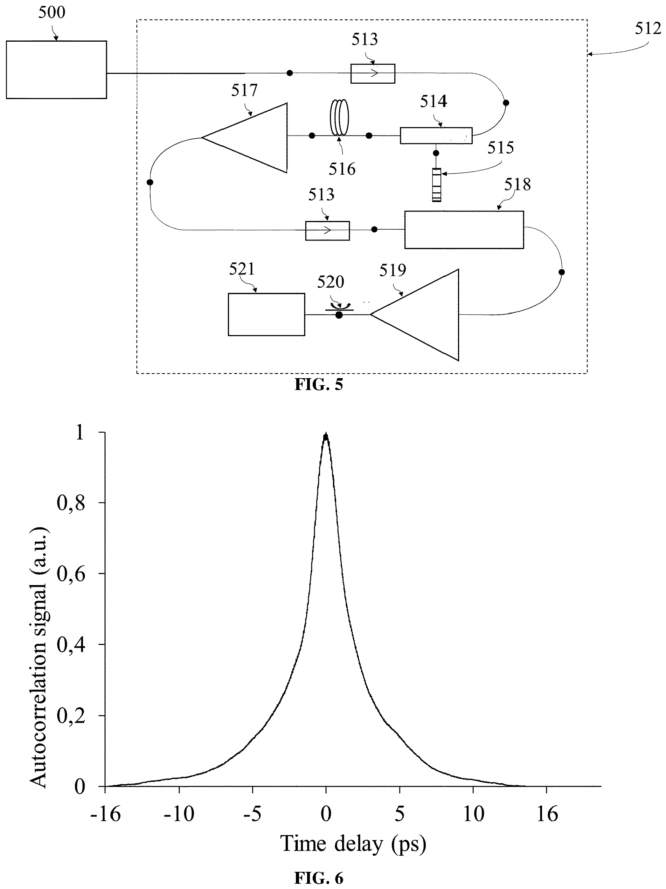

In one embodiment represented in Fig. 5, the passive mode-locked polarized laser 500 is coupled, via the optical output coupler, to a polarized chirped pulse amplifier 512 temporally and spectrally matched to the oscillator. Ultrashort pulses propagating in anomalous material cannot reach very high energies as described by the soliton area theorem. The polarized chirped pulse amplifier allows to amplify to high energy the polarized ultrashort pulses produced in the cavity characterized by a positive total GDD value and used as a seed signal source. The polarized chirped pulse amplifier 512 first stretches the pulses to effectively decrease their peak power. The stretched pulses are then allowed to gain energy. The high energy stretched pulses are then compressed to reach ultrashort pulse duration and high peak power. The polarized chirped pulse amplifier 512 needs to be temporally and spectrally matched to the oscillator in order to reach high quality of stretching and compression as well as high stretching and compression ratio. Preferentially, the polarized chirped pulse amplifier 512 is polarization maintaining.

In one embodiment, the polarized chirped pulse amplifier 512 comprises:
- at least one pulse stretcher element 515 with a spectral transmission bandwidth which coincides, or is greater than that of the oscillator;
- at least one preamplification stage 517;
- a pulse picker element 518 configured to maintain the input signal polarization and serving to decrease a pulse repetition rate by an integer number of times;
- at least one amplification stage 519; and
- a free-space compressor 521 with a spectral transmission bandwidth which coincides, or is greater than that of the oscillator.

The pulse stretcher element 515 allows to stretch the polarized ultrashort pulses output by the oscillator to effectively decrease their peak power. In one embodiment, the pulse stretcher element 515 is a spectral filter. In one embodiment, the pulse stretcher element 515 is a CFBG. In one embodiment, the pulse duration stretching factor ranges between 14 ps/nm and 60 ps/nm leading to a duration of the stretched pulses ranging between 150 ps and 600 ps for a single passage. In one embodiment, considering pulses wavelength of about 2 µm and pulses full width at half maximum spectral bandwidth of about 15 nm, the pulse stretcher element 515 allows to stretch the pulses up to about 350 ps or about 500 ps. In one embodiment, the pulse stretcher element 515 has an adjustable chirp allowing to have an additional degree of freedom for the temporal matching. In one embodiment, the pulses are directed to the pulse stretcher element 515 via a polarization maintaining optical circulator 514.

The preamplification stage 517 allows to compensate losses due to the different elements of polarized chirped pulse amplifier 512. In one embodiment, a single preamplification stage 517 allows to partly compensate insertion losses issued from the fibered pulse stretcher element 515 and the pulse picker element 518 due to an already high energy seed signal. In one embodiment, the preamplification stage 517 comprises a thulium doped fiber. In one embodiment, the preamplification stage 517 is based on a single mode polarization maintaining active fiber.

The main function of a pulse picker element 518 is to decrease a repetition rate of the pulses output by the oscillator to allow high energy output. The repetition rate of the pulse output by the polarized chirped pulse amplifier 512 may be lower than 30 MHz. In one embodiment the repetition rate of the pulse output by the polarized chirped pulse amplifier 512 lies between 200 kHz and 1 MHz leading to the use of a single preamplification stage 517. In one embodiment, the repetition rate of the pulse output by the polarized chirped pulse amplifier 512 lies between 50 kHz and 200 kHz which may lead to the use of an additional preamplification stage 517. In one embodiment, the fibered pulse picker element 518 is based on a single mode polarization maintaining fiber with anomalous dispersion. In one embodiment, the pulse picker element 518 is

an acousto-optic modulator. In one embodiment, the pulse picker element 518 is located after the corresponding preamplification stage 517.

The amplification stage 519 allows to amplify the stretched pulses up to high energies. In one embodiment, the amplification stage 519 is based on a purely single mode thulium fiber. In one embodiment, the fiber of the amplification stage 519 is polarization maintaining. In one embodiment, the at least one amplification stage 519 is based on a large mode area active fiber. In one embodiment, the amplification stage 519 is based on doped bulk material. In one embodiment, the amplification stage 519 is based on a hybrid configuration comprising doped fiber and doped bulk material.

In one embodiment, the polarized chirped pulse amplifier 512 further comprises a pump stripper element 520 dedicated to evacuate not absorbed pump radiation.

The free-space compressor 521 allows to compress the amplified stretched pulses to provide ultrashort and high peak power pulses. In one embodiment, the free-space compressor 521 comprises at least one chirped volume Bragg grating.

In one embodiment, the energy of the pulses output by the polarized chirped pulse amplifier 512 ranges from 0.5 µJ to 5 µJ after compression by a single (or first) amplification stage 519, ranges from 1 µJ to 10 µJ after a possible second amplification stage 519 and ranges from 1 µJ to 40 µJ after a possible third amplification stage 519 when a single passage through the pulse stretcher element 515 is considered.

In one embodiment, the pulse duration of the compressed pulses output by the polarized chirped pulse amplifier 512 ranges between 0.1 ps and 30 ps, preferably between 0.3 ps and 10 ps, more preferably between 0.6 ps and 6 ps.

In one embodiment, a length of fiber is used to improve the temporal and spectral matching between the pulse stretcher element 515 and free-space compressor 521. In one embodiment, the length of fiber is inserted directly after the optical output coupler 303. In one embodiment, the length of fiber is inserted after the pulse stretcher element 515 and the polarization maintaining optical circulator 514. In one embodiment, the length of fiber is inserted between the pulse stretcher element 515 and the polarization maintaining optical circulator 514. The polarization maintaining optical circulator 514 allows for twofold reducing of the complementary lengths of matching fiber by using back and forth passage of reflective stretcher element.

The disclosure also relates to a method for generating polarized pulsed light having a wavelength of about 2 µm, the method comprising:
- providing a passive mode-locked polarized laser (100, 300, 500) wherein the optical output coupler is coupled to a polarized chirped pulse amplifier 512 temporally and spectrally matched to the oscillator;
- directing the ultrashort pulses onto a pulse stretcher element 515 of the polarized chirped pulse amplifier 512 via a polarization maintaining optical circulator 514;
- stretching the ultrashort pulses up to pulse duration ranging between 200 ps and 600 ps for a single passage through the pulse stretcher element 515 aligned to provide a positively chirped pulse (i.e., the same dispersion sign as for output pulses of the oscillator);
- outputting the stretched pulsed light to a preamplification stage 517;
- providing the preamplified stretched pulsed light to a pulse picker element 518 so as to decrease the pulse repetition rate;
- amplifying the output stretched pulsed light while maintaining the polarization; and
- temporally compressing the amplified stretched pulse with the free-space compressor 521 having a fixed linear dispersion parameter which absolute value is lower than corresponding absolute value of a linear dispersion parameter of the pulse stretcher element 515.

In one embodiment, the method further comprises a step for optimizing a chirp of the oscillator output pulse by adjusting the power of its pump source (102, 302) in a range corresponding to a monopulse mode-lock operating regime aiming to finely tune or remove the residual linear chirp of a compressed pulse duration.

### BRIEF DESCRIPTION OF THE DRAWINGS

**Figure 1** is a representation of a first exemplary embodiment of the passive mode-locked polarized laser (example 1).
**Figure 2** is the spectrum of the pulses output by the passive mode-locked polarized laser of example 1. The spectrum is measured in the arbitrary unit (a.u.) of the optical spectrum analyzer (OSA) as a function of the wavelength of the pulses in nanometer (nm).
**Figure 3** is a representation of a second exemplary embodiment of the passive mode-locked polarized laser (example 2).
**Figure 4** is the spectrum of the pulses output by the passive mode-locked polarized laser of example 2. The spectrum is measured in the arbitrary unit (a.u.) of the optical spectrum analyzer (OSA) as a function of the wavelength of the pulses in nanometer (nm).
**Figure 5** is a representation of the second exemplary embodiment of the passive mode-locked polarized laser coupled to an exemplary embodiment of the polarized chirped pulse amplifier (example 3).
**Figure 6** shows the autocorrelation trace of the pulses output by the polarized chirped pulse amplifier of example 3. The autocorrelation trace is measured in the arbitrary unit (a.u.) of the autocorrelation signal as a function of the time delay in picoseconds (ps).

### EXAMPLES

The present disclosure is further illustrated by the following examples.

### Example 1: a passive mode-locked polarized laser wherein the second reflecting surface is the CFBG.

As shown in Fig. 1, the passive mode-locked polarized laser 100 comprises an unpolarized pump source 102 seeding photons with a wavelength of 1560 nm, a cavity 101 comprising a first reflecting element 106 which is a PM CFBG DMR-1967-20-10(+B1+0)-P1 (supplier: Teraxion) characterized by transmission bandwidth of 20 nm centered on 1967 nm and a second reflecting element 105 which is a modelocking saturable absorber mirror SAM-1960-54-10ps-0 (supplier: Batop), and a PM fibered optical isolator PMI-1970-2-2-N-B-Q-B-P 104 (supplier: AFR). This is a special embodiment where the CFBG plays the role of the first reflecting element, of a dispersion compensation system and of an optical output coupler characterized by an output coupling ratio of 82%. The pump source 102 is coupled to the cavity through the optical pump-signal combiner 107 which is a wavelength division multiplexor PMWDM-1-15701970-N-B-Q-6 (supplier: Lightel) located outside the two reflecting elements. The cavity further comprises a gain fiber 108 PM-TSF-9/125 (supplier: Coherent/Nufern) which is an active fiber core-doped with thulium ions, a length of about 1.5 m of a polarization maintaining anomalous dispersion passive fiber 111 proprietary-coupled to the second reflecting element 105 and a fixed fibered linear polarizer 110.

This example laser is implemented in industrial conditions and demonstrated the following performances: more than 1000 hours maintenance-free operation (actually 8000 h operation were achieved without maintenance), short warm-up time (lower than 30 min), large pulse to pulse stability (less than 2% RMS over 1000 shots), long-term stability (less than 2% RMS over 8 h) in average climate parameters of 20-28°C and 50-70% humidity. The spectrum of the pulses output by this example embodiment are represented in Fig. 2. Fig. 2 shows that the full width at half maximum spectral bandwidth measured at -10 dB of the pulses is 10.1 nm.

The gain fiber 108 defines the operating wavelength to 1966 nm. The length of polarization maintaining anomalous dispersion passive fiber 111 allows for the total GDD value to be equal to +0.114 ps² and the repetition rate to be equal to 19.15 MHz. The energy of the output pulses corresponding to monopulse modelocking regime was measured after optical isolator 104 to range between 0.45 nJ and 1.05 nJ. The corresponding pulse duration of the outputting pulses was measured to range between 2 ps and 6 ps after propagation in about 7 m of standard polarization maintaining fibers, measured from the middle of the first reflecting element 106. The corresponding full width at half maximum spectral bandwidth of the pulses measured at -10 dB is varying in the range between 10 nm and 15.5 nm.

### Example 2: a passive mode-locked polarized laser wherein the second reflecting surface is a linear mirror.

As shown in Fig. 3, the passive mode-locked polarized laser 300 comprises an unpolarized pump source 302 seeding photons with a wavelength of 1560 nm, a cavity 301 comprising a first reflecting element 306 which is a P1-1550PMR-P01-1 polarization maintaining linear mirror coated with silver layer having a broadband reflection (supplier: Thorlabs) and a second reflecting element 305 which is a SAM-1960-54-10ps-0 modelocking saturable absorber mirror (supplier: Batop) proprietary-coupled to a polarization maintaining fiber, an optical output coupler 303 which is the a PMFC-1X2-2000-10/90-1-250-5-1-NE (supplier: OPNETI) characterized by an output coupling ratio of 90%, a polarization maintaining fibered PMI-1970-2-2-N-B-Q-B-P optical isolator 304 (supplier: AFR) and a dispersion compensation system 309 which is a length of polarization maintaining normal dispersion fiber of about 3.5 m of a PM2000D (supplier: Coherent/Nufern). The pump source 302 is coupled to the cavity through the optical pump-signal combiner 307 which is a wavelength division multiplexor PMWDM-1-15701970-N-B-Q-6 (supplier: Lightel) located between the two reflecting elements. The cavity 301 further comprises a gain fiber 308 which is a short length of an active fiber highly doped with thulium ions PM-TSF-9/125 (supplier: Coherent/Nufern), a length of about 1 m of a passive fiber 311 and a fixed fibered linear polarizer 310.

The spectrum of the pulses output by this example embodiment is represented in Fig. 4.

The short length of gain fiber 308 and output coupling ratio of 90% mainly defines the operating wavelength to 1955 nm. The total GDD value is +0.18 ps². The combination of polarization maintaining normal dispersion fiber 309 and 311 also allows the repetition rate to be equal to 14.9 MHz. The maximum energy of the pulses at the output of optical isolator 304 for the oscillator operating in monopulse regime is 1.3 nJ. The duration of the outputting pulses is 29 ps. The corresponding full width at half maximum spectral bandwidth of the pulses measured at -10 dB is 7 nm.

### Example 3: a polarized chirped pulse amplifier coupled to the passive mode-locked polarized laser through the optical output coupler.

As shown in Fig. 5, the passive mode-locked polarized laser 500 of example 1 is coupled to a polarized chirped pulse amplifier 512. The polarized chirped pulse amplifier 512 comprises a polarization maintaining isolator 513, a polarization maintaining optical circulator 514, a pulse stretcher element 515 which is a CFBG PSR-1967-15(-D34.5+0)-1P1-0R (supplier: Teraxion) characterized by a spectral transmission bandwidth of about 15 nm centered on 1967 nm and a stretching factor of -34.5 ps/nm allowing to stretch the pulses to about 350 ps, a length of 5 m of the commercial PM1550-type single mode polarization maintaining fiber 516 to improve the matching between the stretcher and compressor elements, a preamplification stage 517 adjusted to provide pulses with an average power of 100 mW to a polarization maintaining pulse picker (frequency reduction factor was between 2 and 100) element 518 comprising an acousto-optic modulator MT80-FIR40-Fio-PM0,5-J1-A-VSF (supplier: AA OPTO-ELECTRONIC) and a radio frequency driver PPKS80-B-34-640 (supplier: AA OPTO-ELECTRONIC), an amplification stage 519 based on a short length of purely single mode thulium fiber PM-TDF-10P/130-HE (supplier Coherent/Nufern) optically cladding-pumped through pump-to-signal combiner PMMPM-(2+1)^{∗}1-F-793/50W-1970-110/604-604-C4-1m/ (supplier: Lightcomm) by a multimode pump diode K793DAERN-16.00WN1N-10522F20ENA1 (supplier: BWT) emitting maximum of 16W at 793 nm, a pump stripper element 520, and a free-space compressor CBG-1967-85(33)-M(M) 521 (supplier: IPG/Optigrate) comprising a chirped volume Bragg grating with a spectral transmission bandwidth of 15 nm centered on 1967 nm and a stretching factor of +33 ps/nm. The preamplification stage 517 comprises a PM gain fiber IXF-2CF-Tm-PM-6-130-0.21 (supplier: Ixblue) optically core-pumped through PM wavelength division multiplexor PMWDM-1-15701970-N-B-Q-6 (supplier: Lightel) by a proprietary-made single mode laser source emitting maximum of about 1 W at 1560 nm and an optical isolator PMI-1970-2-2-N-B-Q-B-P (supplier: AFR). The pump stripper element 520 is a short piece of matched passive fiber spliced with the corresponding active fiber, where naked fibers length in a vicinity of splice point position is recoated with a high refractive index polymer with the aim to re-direct not absorbed optical pump power toward fiber metallic support, through artificial violation of total internal reflection law, where pump light could not further be waveguided in the active fiber cladding.

This example embodiment is implemented in industrial conditions and demonstrated the following performances: more than 1000 hours maintenance-free operation, short warm-up time (lower than 30 min), large pulse to pulse stability (less than 2% RMS over 1000 shots), long-term stability (less than 2% RMS over 8 h) with diffraction limited divergence (M²<1.1) and beam pointing stability strong enough to provide successful application in various semiconductor micromachining manufacturing protocols (for example, with ability to three dimensional control of a micrometer scale material modifications inside a silicon) in conditions with average climate parameters of 20-28°C and 50-70% humidity. The autocorrelation trace of the pulses output by the polarized chirped pulse amplifier 512 is represented in Fig. 6. Fig. 6 shows that the pulse duration is about 2 ps.

The pulse picker element 518 reduces the repetition rate to about 200 kHz. The energy of the pulses output by the polarized chirped pulse amplifier is about 1.4 µJ and measured compressed pulse energy of is about 1.1 µJ, slightly limited by insertion losses of compressor stage optics.

## Claims

1. A passive mode-locked polarized laser (100, 300, 500) comprising an oscillator generating ultrashort pulses, the oscillator comprising the following coupled components:
- a cavity (101, 301);
- a pump source (102, 302) coupled to the cavity;
- an optical output coupler (106, 303); and
- an optical output isolator (104, 304);
**characterized in that** the operating wavelength is about 2 µm, and the net value of the total cavity group delay dispersion is larger than +0.1 ps².

2. The laser according to claim **1,** wherein the cavity (101, 301) comprises:
- an optical pump-signal combiner (107, 307);
- a first reflecting element (106, 306);
- a second reflecting element (105, 305) which is a modelocking reflecting element,
and further comprises between the two reflecting elements (105, 305) and (106, 306):
- a gain material (108, 308);
- a dispersion compensation system (106, 309); and
- a fixed polarizer (110, 310); preferably a fixed fibered linear polarizer, and wherein the cavity (101, 301) is polarization maintaining.

3. The laser according to claim **2,** wherein the gain material (108, 308) is an anomalous dispersion gain material.

4. The laser according to claim **2** or claim **3,** wherein the gain material (108, 308) is a silica fiber whose core is doped with thulium and/or holmium.

5. The laser according to any one of claims **2** to **4,** wherein the second reflecting element (105, 305) being a modelocking reflecting element is a saturable absorber, preferably the saturable absorber is a saturable absorber mirror or is fiber coupled, more preferably the saturable absorber is fiber coupled and the coupling fiber is polarization maintaining.

6. The laser according to any one of claims **2** to **5,** wherein one of the modelocking reflecting elements (105, 106, 305, 306) is a spectral filter, preferably a chirped fiber Bragg grating.

7. The laser according to any one of claims **2** to **6,** wherein the cavity (101, 301) further comprises at least an element preserving a linear polarization for intracavity circulating light, preferably a section of a polarization maintaining fiber.

8. The laser according to any one of claims **1** to **7,** wherein the optical output coupler 303 is coupled to a polarized chirped pulse amplifier 512 temporally and spectrally matched to the oscillator, preferably the polarized chirped pulse amplifier 512 is polarization maintaining.

9. The laser according to claim **8,** wherein the polarized chirped pulse amplifier 512 comprises:
- at least one pulse stretcher element 515 with a spectral transmission bandwidth which coincides, or is greater than that of the oscillator;
- at least one preamplification stage 517;
- a pulse picker element 518 configured to maintain the input signal polarization and serving to decrease a pulse repetition rate by an integer number of times;
- at least one amplification stage 519; and
- a free-space compressor 521 with a spectral transmission bandwidth which coincides, or is greater than that of the oscillator.

10. The laser according to claim **9,** wherein the at least one preamplification stage 517 is based on a single mode polarization maintaining active fiber.

11. The laser according to claim **9** or claim **10,** wherein the at least one amplification stage 519 comprises a polarization maintaining large mode area active fiber.

12. The laser according to any one of claims **8** to **11,** wherein the polarized chirped pulse amplifier 512 has a repetition rate lower than 30 MHz, preferably lying in 50 kHz - 1 MHz range.

13. A method for generating polarized pulsed light having a wavelength of about 2 µm, the method comprising:
- providing a passive mode-locked polarized laser (100, 300, 500) according to any one of claims **8** to **12;**
- directing the ultrashort pulses onto a stretcher element 515 of the polarized chirped pulse amplifier 512 via a polarization maintaining optical circulator 514;
- stretching the ultrashort pulses up to pulse duration ranging between 200 ps and 600 ps for a single passage through the stretcher element 515 aligned to have the same dispersion sign as for output pulses of the oscillator;
- outputting the stretched pulsed light to a preamplification stage 517;
- providing the preamplified stretched pulsed light to a pulse picker element 518 so as to decrease the repetition rate;
- amplifying the output stretched pulsed light while maintaining the polarization; and
- temporally compressing the amplified stretched pulse with the free-space compressor 521 having a fixed, an absolute value of the linear dispersion parameter which is lower than corresponding absolute value of linear dispersion parameter of the stretcher element 515.

14. The method according to claim **13,** wherein the method further comprises a step for optimizing a chirp of the oscillator output pulse by adjusting the power of its pump source (102, 302) in a range corresponding to a monopulse mode-lock operating regime.
